# EUROPEAN PATENT SPECIFICATION

(11) **EP 3 471 515 B1**
(45) Date of publication and mention of the grant of the patent: **15.07.2020**
(21) Application number: 18198179.6
(22) Date of filing: 02.10.2018
(51) Int. Cl.: H05B 47/185, H05B 45/00

(54) **ILLUMINATION SYSTEM**
BELEUCHTUNGSSYSTEM
SYSTÈME D'ILLUMINATION

(30) Priority: 10.10.2017 IT 201700113808
(43) Date of publication of application: 17.04.2019
(73) Proprietor: Energy Technology S.r.l., 40056 Valsamoggia (BO) (IT)
(72) Inventor: FACCHINI, Gianni, 44047 San Carlo (Ferrara) (IT); PAGANI, Luca, 40128 Bologna (IT); MAZZOTTI, Matteo, 48034 Fusignano (Ravenna) (IT); RIZZOLI, Fabio Cesare, 40125 Bologna (IT)
(74) Representative: Milli, Simone

(56) References cited:
- GB-A- 2 540 333
- US-A- 5 926 115
- US-B2- 9 755 744

## Description

This invention relates to a flashing lighting system, in particular provided for airport contexts (typically landing and nearby areas).

In more detail, the invention relates to a lighting system in which the transmission of control, configuration and diagnostic messages between the various components must be subjected to a checking relative to their correct reception.

There are prior art lighting systems in the airport sector comprising luminous or light sources, of the halogen or LED type, and distributed in a raised fashion, on suitable supports, and/or built in, in suitable housings, along the runways and nearby areas, with the aim of generating signalling lights useful for guiding the aircraft during the manoeuvring phases.

Of particular importance amongst the systems typically used there are the flashing lights, amongst which there are those with the function of landing signalling (for example SFL, sequential flashing light), threshold (for example RTIL, runway threshold indicator lights) and guidance (CGL, circling guidance light) inside the airport area. Typically, these flashing lights are used to reinforce the other fixed light signalling systems and comprise the installation of suitable power supply and control modules for the LEDs, associated with said lights and known as FFU (Flash Field Units).

The above-mentioned flashing systems may comprise a large number of lights, to which electricity is supplied by a power cable, connected to a power supply unit or directly to the electricity distribution network.

The aim is to create combinations of lights, for example for generating a sequential flashing light (SFL) which starts from the light furthest away from the runway and ends with the one (or those, if several lights flash simultaneously) closest to the runway.

In another case, some lights can be grouped into clusters (also called flashing groups) in each of which the lights flash simultaneously, since they are physically adjacent and/or because they delimit zones located at the same distance from a reference point, or at the sides of the threshold of the runway.

It should be noted that the lights also flash with different luminous intensities: the combination between the current which passes through the circuit of the LED and the switching on time of the light in relation to the rest time determines the luminous intensity perceived by the eyes of the pilot landing. On the basis of the recommendations of the regulatory authorities, three levels of luminosity are planned, of which one high (100% intensity), one intermediate (for example 30%) and one low (for example 10%) for the most favourable conditions (at night with maximum visibility).

As it is therefore necessary to activate the lights according to different configurations, different times and frequencies and different groups, the large number of different combinations of their operation is clearly evident. Accordingly, each lighting system is equipped with a unit designed to control a light (FFU) of a power/monitoring/control module which is controlled by means of encoded messages, transmitted, for example, with power-line-communication along the power supply line. In the module there is an electronic processing device equipped with firmware which processes the messages received to determine the correct times for switching on the LED light, interprets the synchronisation messages with the other lights, performs diagnostic operations and sends messages corresponding to the results, and other operations to keep under control their electrical parameters, their temperature and their general operating conditions and other parameters and events, such as abnormal operation sequences, re-starting, commands which are incorrect and/or outside specification. In this way, the network coordinator is able to retrieving information on these faults and, if necessary, intervene.

Equally evident is the extremely high number of messages exchanged between the central control unit and the various power/monitoring/control modules.

Given the importance of the correct operation of the lighting system, there is a strongly felt need of ensuring that each control, configuration, synchronisation message is correctly received by the recipient device.

In effect, it may happen that in some lighting systems the transmission channel is not optimum, for example due to disturbances, or on account of a connection which is quite long or structured in such a way as to cause attenuations or multiple reflections which can lower the performance of transmitting/receiving the packets.

Patent document US5926115 describes a lighting system which allows two-way communication between the control processor and the field illuminators. The two-way communication signals are formed using a modulated radio-frequency signal which is transmitted through a circuit containing many transformers having the primary winding connected in series.

Respective secondary windings of the transformers are connected to the various lighting devices.

The aim of this invention is therefore to provide a flashing lighting system, which is able to check, with a high degree of selectivity, promptness and effectiveness that each control, configuration, updating and synchronisation message is correctly received by the recipient device.

A further aim of this invention is to provide a lighting system which, if there is that a status message (but possibly also a control or configuration message) that has not been correctly received by the recipient device, it is able to repeat the message and, if the confirmation to the message is not correctly and in turn received, to repeat the confirmation. In short, the aim of this invention is to provide a flashing lighting system which is particularly reliable.

According to the invention, these aims are achieved by a lighting system according to the invention, comprising the technical features described in one or more of the appended claims. The invention relates to a flashing lighting system according to claim 1, with further embodiments disclosed by the dependent claims.

The technical features of the disclosure, with reference to the above aims, are clearly described in the claims below and its advantages are apparent from the detailed description which follows, with reference to the accompanying drawings which illustrate a preferred, non-limiting example embodiment, and in which:
- Figure 1 is a schematic view of a first possible configuration of the lighting system according to the invention;
- Figure 2 is a schematic view of a second possible configuration of the lighting system according to the invention;
- Figures 3A, 3B and 3C illustrate a schematic conceptual representation of three situations which can occur in the lighting system according to the invention.

With reference to the accompanying schematic drawing, the numeral 1 denotes a traditional flashing lighting system, purely by way of a non-limiting example, provided for airport contexts (landing and nearby areas). The number of lights of the system may vary: typically, the number of lights used, preferably of the LED type, may be 32 but there may be a different number of lights.

As stated in the introduction, the system may be configured to generate a sequence of lights or the lights can be grouped together in clusters and flash simultaneously. The luminous intensity of the lights can be adjusted. The lighting system 1 comprises a plurality of LED illuminators 3 electrically connected to an electrical power cable 2, configured to convey a power supply current and having at least one end 2A coupled with the electricity distribution network, designed to supply current in the power cable 2.

It should be noted that, generally, the power cable 2 is a particularly along electrical cable, since it can be positioned to cover the entire length of the landing area.

It should be noted that the illuminators 3, each of which may be equipped with one or more LEDs designed to emit an illumination beam, are powered by power/monitoring/control modules, labelled 4A, 4B in the accompanying drawings, which in turn control the LED illuminator 3.

In particular, for each illuminator 3 the respective power/monitoring/control module 4A, 4B is equipped with an electronic processing device, designed to perform for monitoring and control operations and process data on the basis of a predetermined firmware recorded in it. The firmware operates by interpreting and processing a series of encoded messages sent to it by a central control unit 6, for example by power-line-communication which travels along the power cable 2.

It should be noted that for simplicity of description reference will always be made to only two modules 4A and 4B, bearing in mind that the number of modules provided in the lighting system is much higher, and comprises many more modules 4N not illustrated in the drawings for greater clarity and simplicity of description.

In more detail, each module 4A, 4B comprises a communication and control unit 7, designed to allow and control the exchange of messages with the central control unit 6, the form and circuit design of which are obvious and easy to understand for a technical expert in the trade.

With regard to the central control unit 6, it comprises a communication and control unit 17 which is able to receive/transmit the messages by power-line-communication along the power cable 2 for controlling the power/monitoring/control modules 4A, 4B.

This allows the central control unit 6 to manage and coordinate the switching on/off of the LED lights 3, synchronising the operation between the power/monitoring/control modules 4, modifying the configuration parameters, receiving status and diagnostic information from the modules 4 and, if necessary, processing them before sending to the remote control system.

It should be noted that, through the sending of the encoded messages, digital information is transmitted by the central control unit 6 to the modules 4A, 4B, and, through this digital information, each module 4A, 4B is able to regulate the brightness, synchronisation, determine the starting and switching off times of the relative LED illuminator 3, as well as satisfy the diagnostic requirements.

Basically, the communication and synchronisation system between the units is based on exchanges of power-line-communication messages according to industrial standards of the type known in the sector. By means of these standards, in addition to the normal controls for the switching on and off of the lights, regular controls are performed on the synchronisation of the system to check the consistency of the time reference shared by all the units in the field by the alignment of some internal timers. This synchronisation is fundamental as it ensures that the switching on sequence of the lights is correct and that the sequence of lights actually appears as such.

The messages which travel along the power cable 2 are packets of variable length, and may be of a broadcast or unicast type. They may comprise the sending of a confirmation (ACK/NACK) or not. Associated with the central control unit 6 there is also, if necessary, a web server 16, connected by suitable interface to the power cable 2. The preparation of the Web server 16 allows additional services to be provided, such as the logging of events or the access by Web interface.

In the case of diagnostic operations, an exchange of messages is performed between the central control unit 6 and the power/monitoring/control modules 4A, 4B, automatically at regular intervals. The main parameters of each module 4A, 4B which can, once analysed, indicate the presence of a problem, are requested in rotation. For example, the aim is to detect malfunctions of medium or serious extent, over-currents, over-voltages, temporary voltage drops, unplanned re-starts, time references of modules, generic status parameters (active, configured, calibrated module). If a module does not respond to this interrogation, the problem is signalled to the coordination system and to the remote control. If, once it has been declared as absent, a module reappears in the system, it is automatically re-included in the automatic diagnostic cycle and its return is signalled to the network coordinator.

The diagnostics operation may also be performed on specific request for a single module 4A, 4B in a predetermined moment, to obtain additional information with respect to the standard information. The additional information relates to several physical parameters, for example the temperature of the power/monitoring/control module 4A, 4B, but also specific parameters for use by the maintenance technician such as the version of the firmware present on the module.

According to this invention, a "smart" repeater device 11 of the encoded messages is interposed (in a logic / functional sense, that is to say, inserted) between the central control unit 6 and the power/monitoring/control modules 4A, 4B.

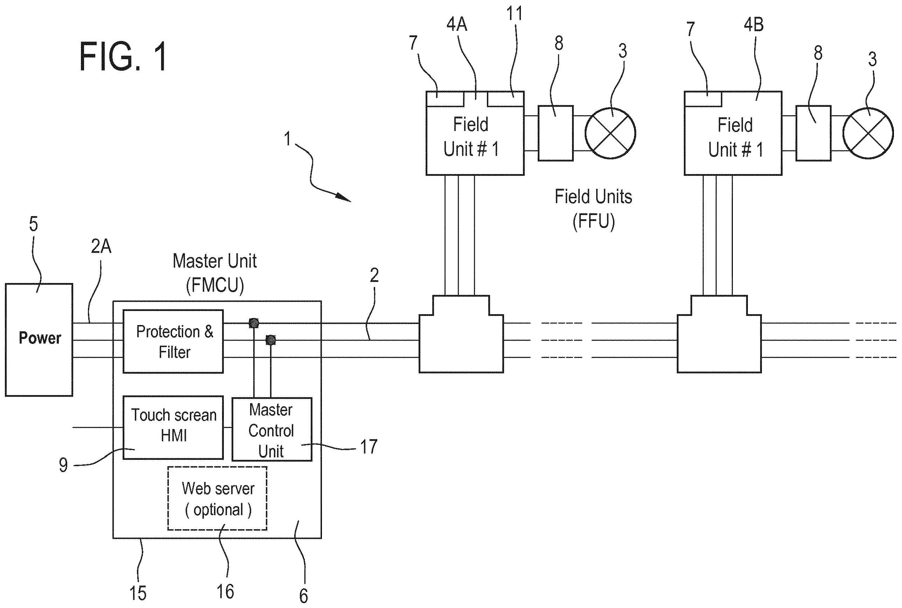

There may be two methods for installation of the repeater device 11. According to a first possibility, the repeater device 11 may be itself one of the modules 4A, selected in a considered fashion, and is connected with the power supply cable 2 (Figure 1). In short, this coincides with one of the modules 4A, and carries out its function, as described below, together with the control of the respective LED illuminator 3.

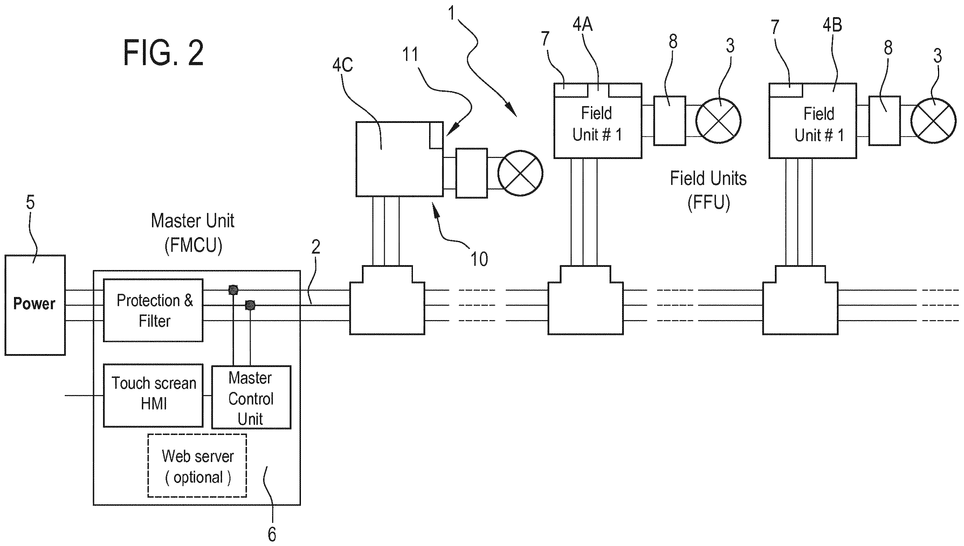

On the other hand, according to the second possible configuration, illustrated in Figure 2, the smart repeater device 11 is situated inside a relative housing 10, directly connected with the power supply cable 2. With the provision of the "smart" repeater device 11 during the transmission of an encoded message between the central control unit 6 and one or more or all of the power/monitoring/control modules 4A, 4B the smart repeater device 11 receives the message and repeats it (that is, re-sends it), towards the power/monitoring/control module 4A, 4B or, respectively, the recipient central control unit 6.

The repeater device 11 receives the message and repeats it towards the second power/monitoring/control module 4B or, respectively, towards the recipient central control unit 6, depending on which of them is the recipient of the encoded message.

The actual setting up of the repeater device 11 is controlled by logic commands from the central control unit 6, through the control and coordination unit 17.

In its operation, the repeater device 11 always repeats the encoded messages which are sent in general to all the modules (4A, 4B) and which are not status checking messages. In other words, the repeater device 11 always repeats the switching on messages, messages modifying luminous intensity, switching off messages, messages changing configuration parameters, confirmation messages sent by the individual modules (4A and 4B) as ACK of the commands sent by the central control unit 6 and non-status messages sent by the latter to the individual modules (4A, 4B). Basically, the following situation occurs:

### Request

FMCU (central control unit 6) (message) → repeater device 11
repeater device 11 (message) → FFU (e.g. module 4A)

### Response (if planned)

FFU (e.g. module 4A) (message) → repeater device 11
repeater device 11 (message) → FMCU (central control unit)
In the case, on the other hand, of status control messages, sent to the individual modules 4A, 4B to obtain parameters such as current, temperature, voltage, as well as to check for the presence or reachability of a specific module 4A, 4B, each encoded message is repeated only if the repeater device 11 does not detect on the network the passage of a confirmation message within a predetermined limit time *timeout* = tₒᵤₜ. In this case, the situation may illustrated as follows:
F MCU (central control unit 6) (status request) → FFU1 (module 4A)
F FU1 (module 4A) (status response) →FMCU (central control unit 6)
F MCU (central control unit 6) (status request) → FFU2 (module 4A)
F FU2 (module 4A) (status response) → FMCU (central control unit 6)
F MCU (central control unit 6) (status request) → FFUN (module 4N)
F FUN (module 4N) (status response) → FMCU (central control unit 6) Following the latter transaction, the status request cycle may be considered completed and it may restart from the unit FFU1 (module 4A).

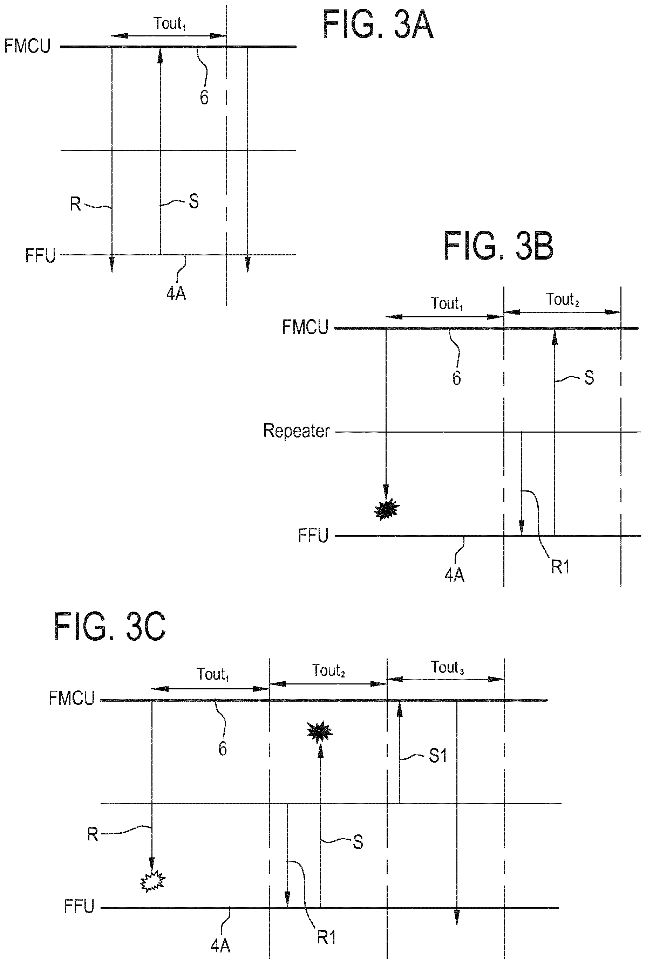

Figures 3A, 3B and 3C briefly describe three situations, schematically illustrated in the drawings, which may occur.

Figure 3A illustrates a situation in which a status request has been successful. The upper horizontal line represents the central control unit 6 and the lower horizontal line represents the module 4A. The central horizontal line represents, on the other hand, the repeater device 11.

The first vertical line R, on the left, represents the encoded message sent and the arrow at the bottom meets the line of the module 4A after the status message has crossed the line of the repeater device 11, this indicating that both the units 4A and 11 have received the message, but without this implying that the repeater interposes between the two or repeats, in this case successfully, any message.

The second vertical line S indicates the response from the line of the module 4A up to the line of the central control unit 6 passing through the line of the repeater device 11, bearing in mind the specification in the previous point.

The central control unit 6 (FMCU) then sends a new request to the next module 4B (FFU). Also in this case, the repeater device 11 does not need to repeat anything because it detects both the messages and the responses.

Figure 3B represents, on the other hand, the situation in which the status request process undergoes the loss of a packet.

The central control unit 6 (FMCU) sends a request, vertical line R, but the module 4A (FFU) does not reply within Tₒᵤₜ₁: the repeater device 11 repeats the message towards the module 4A (FFU), with the vertical line R1;this time the module 4A replies, line S.

Lastly, Figure 3C refers to a situation in which the status request process undergoes the loss of two packets.

The central control unit 6 (FMCU) sends a request R but the module 4A (FFU R) does not reply within Tₒᵤₜ₁; the repeater device 11 repeats the message R1 to FFU, which responds with S.

The central control unit 6 (FMCU) does not send a new request (to the next FFU device) within Tₒᵤₜ₂; it has probably not received the reply of FFU. The repeater device 11 repeated to FMCU the response S1 which has the same content as S and which had as original sender the FFU unit (module 4A).

At this point the central control unit 6 (FMCU) sends a new request within the expiry of Tₒᵤₜ₃. If within Tₒᵤₜ₃ FMCU does not receive/send anything it means that the FFU unit cannot be reached (for example, faulty or absent).

In short, in order to understand which messages have not been received, the repeater device 11 remains in "conversation listening mode" and repeats the messages by replacing FMCU (or FFU) if, respectively, FFU (or FMCU) do not respond within a certain limit time (*timeout*).

If it is impossible for the central control unit 6 FMCU to communicate with the repeater 11 on account of a fault of said repeater, the FMCU would be able to automatically promote another FFU unit to repeater, signalling this event to the remote control system.

In other words, the central control unit 6 is configured in such a way that if it is impossible to communicate with the repeater 11, the central control unit 6 automatically promotes another repeater 11. For example, the unit 6 assigns the repeater function to another module 4A, 4B.

When the system has been completed, the central control unit 6 also comprises a touch screen panel 9 connected with the communication and control unit 17 and with a user interface to display the information exchanged with the modules 4A, 4B, as well as the results of the diagnostic operations carried out.

Moreover, by means of the touch screen panel 9 it is possible to perform maintenance operations and/or give commands and send messages to the power/monitoring/control modules 4A, 4B, all by power-line-communication along the power supply cable 2.

The lighting system 1 also comprises a Web server 16 connected using suitable interface to the power cable 2 to guarantee additional services, such as the logging of events or access by Web interface and to allow control and diagnostic and updating operations to be performed from a remote position, both on the modules and on the communication and control unit 17.

In order to obtain a more ordered configuration, the central control unit 6 is located with all its components inside a control cabin 15.

The advantages of the invention are fully apparent.

The adjective "smart", referred for example to the repeater 11, indicates the fact that the unit is able to select with criteria which types of encoded messages it is necessary to repeat on the network and which it is not.

For example, the *broadcast* commands which the central control unit 6 sends to the modules 4A, 4B (for example, "Flash switching on", "Modification of flash luminous intensity", "Flash switching off", "Change of configuration parameter", etc.) are all in any case repeated.

But so as not to overcrowd the network, doubling the most frequent type of message inside the system (status request) and considering that inside a network it is possible that only a small part of the devices (those furthest from the central control unit) can actually have a lower communication performance, the repeater device 11 only retransmits those status requests/status responses which could actually have been lost within a particular transaction.

Moreover, a further advantage of the proposed lighting system 1 is that of substantially increasing the overall reliability of the lighting system since there is always the certainty that the encoded messages have reached the recipient device, or the notification of the unreachability of the recipient device is received, giving the possibility to the operators to implement the necessary measures to restore the complete functionality of the lighting system.

The description has specified that the encoded messages are transmitted by power-line-communication along the power supply line 2, but this specification is purely by way of an example as it is possible to use other means for communication of the encoded messages.

In the accompanying drawings the numeral 8 denotes a connector of the electric type.

## Claims

1. A flashing lighting system (1), comprising:
- a plurality of illuminators (3) electrically connected to a power cable (2) to be powered by it;
- a plurality of power/monitoring/control modules (4A, 4B), each power/monitoring/control module (4A, 4B) associated with a respective illuminator (3) and equipped with an electronic processing device configured to carry out monitoring and control operations and to process data based on a predetermined firmware recorded therein;
- a central control unit (6) configured to act on each power/monitoring/control module (4A, 4B) to send and receive encoded messages to and from it, said encoded messages including status control messages, said encoded messages being processed based on that firmware to determine the time for switching on and off the respective illuminator (3), to verify synchronization with switching on and off of other 15 illuminators (3), and to perform diagnostic operations;
- at least a repeater device (11) for receiving and repeating said encoded messages, the at least one repeater device (11) being interposed between the central control unit (6) and the power/monitoring/control modules (4A, 4B), the flashing lighting system being **characterized in that**:
- the plurality of illuminators (3) are LED illuminators,
- the at least one repeater device (11) is configured so that, during transmission of an encoded message, which is not a status control message, between said central control unit (6) and one or more of the power/monitoring/control modules (4A, 4B), said repeater device (11) receives said encoded message and repeats it to the respective one or more power/monitoring/control modules (4A, 4B) or to said central control unit (6),
- the repeater device (11) is configured, in the case the encoded message being a status control message, for retransmitting said status control message sent by said central control unit (6) to a respective one of said power/monitoring/control modules (4A, 4B), if the power/monitoring/control 30 module (4A, 4B) does not reply within a first limit time (Tₒᵤₜ₁) and for retransmitting said status control message sent by said power/monitoring/control module (4A, 4B) to said central control unit (6), if the central control unit (6) does not reply within a second limit time (Tₒᵤₜ₂).

2. The flashing lighting system (1) according to claim 1, wherein the repeater device (11) repeats the encoded messages which are not status control messages, which are sent in general to all the modules (4A, 4B) and which comprise at least switching on messages, messages modifying luminous intensity, switching off messages, messages changing configuration parameters.

3. The flashing lighting system (1) according to claim 1 or 2, wherein the repeater device (11) repeats status control messages, sent to individual modules (4A, 4B) to obtain at least parameters such as current, temperature, voltage, as well as to check for the presence or reachability of a specific module (4A, 4B), continuously until receiving a confirmation message within a predetermined time limit from the recipient module or control unit of the encoded message.

4. The flashing lighting system (1) according to any one of claims 1 to 3, wherein said repeater device (11) is one of said power/monitoring/control modules (4A, 4B) and is connected to said power cable (2).

5. The flashing lighting system (1) according to any one of claims 1 to 4, wherein said repeater device (11) is situated inside a housing (10) and is connected with said power cable (2) by means of a junction box.

6. The flashing lighting system (1) according to any one of claims 1 to 5, wherein said encoded messages are transmitted by means of power-line-communication along said power cable (2).

7. The flashing lighting system (1) according to any one of claims 1 to 6, wherein each power/monitoring/control module (4A, 4B) comprises a communication and control unit (7), for the exchange of messages with the central control unit (6) and the management of the respective LED illuminator (3).

8. The flashing lighting system (1) according to any one of claims 1 to 7, wherein the central control unit (6) comprises a communication and control unit (17), which are able to receive/transmit messages by power-line-communication along said power cable (2) for controlling said power/monitoring/control modules (4A, 4B) in order to switch on/off respective LED illuminators (3), synchronise with other power/monitoring/control modules (4A, 4B), modify configuration parameters, transmit status and diagnostic information.

9. The flashing lighting system (1) according to any one of the preceding claims and claim 3, wherein the central control unit (6) is located inside a control cabin (15) and comprises a touch screen panel (9) connected with said communication and control unit (17), which implements a user interface whereby messages transmitted to and received from said power/monitoring/control modules (4A, 4B) and results of the diagnostic operations performed are displayed and whereby maintenance operations are performed and/or commands given and messages sent to said power/monitoring/control modules (4A, 4B), all by means of power-line-communication along said power cable (2).

10. The flashing lighting system (1) according to any one of claims 1 to 9, wherein the lighting system (1) also comprises a web server (16) connected using suitable interface to said power cable (2) to provide additional services, comprising logging of events or access by Web interface and allowing control and diagnostic operations to be performed from a remote position, and performing firmware updates both on said modules and on said central control unit (6).

11. The flashing lighting system (1) according to any one of claims 1 to 10, wherein said flashing lighting system (1) is configured for use for signalling purposes in an airport area, with said LED illuminators (3) positioned on raised supports and/or built into suitable housings, along landing and nearby areas.

12. The flashing lighting system (1) according to any one of claims 1 to 11, wherein the central control unit (6) is configured in such a way that if it is impossible to communicate with the repeater (11), the central control unit (6) automatically switches to another repeater (11).

## Patentansprüche

1. Blinkendes Lichtsystem (1), umfassend:
- eine Vielzahl an Beleuchtern (3), die elektrisch mit einem Stromkabel (2) verbunden sind, um von diesem mit Strom versorgt zu werden;
- eine Vielzahl an Versorgungs-/Überwachungs-/Steuermodulen (4A, 4B), wobei ein jedes Versorgungs-/Überwachungs-/Steuermodul (4A, 4B) mit einem jeweiligen Beleuchter (3) assoziiert ist und mit einer elektronischen Verarbeitungsvorrichtung ausgestattet ist, die zur Durchführung von Überwachungs- und Steuervorgängen und zur Verarbeitung von Daten basierend auf einer darin aufgezeichneten vorbestimmten Firmware konfiguriert ist;
- eine zentrale Steuereinheit (6), die so konfiguriert ist, dass sie auf ein jedes Versorgungs-/Überwachungs-/Steuermodul (4A, 4B) einwirkt, um codierte Nachrichten zu und von diesem zu senden und zu empfangen, wobei die codierten Nachrichten Statussteuernachrichten beinhalten, wobei die codierten Nachrichten basierend auf der Firmware verarbeitet werden, um die Zeit zum Ein- und Ausschalten des jeweiligen Beleuchters (3) zu bestimmen, um die Synchronisation mit dem Ein- und Ausschalten anderer Beleuchter (3) zu überprüfen und um Diagnosevorgänge durchzuführen;
- mindestens eine Repeater-Vorrichtung (11) zum Empfangen und Wiederholen der codierten Nachrichten, wobei die mindestens eine Repeater-Vorrichtung (11) zwischen der zentralen Steuereinheit (6) und den Versorgungs-/Überwachungs-/Steuermodulen (4A, 4B) angeordnet ist,
wobei das blinkende Lichtsystem **dadurch gekennzeichnet ist, dass**:
- die Vielzahl an Beleuchtern (3) LED-Beleuchter sind,
- die mindestens eine Repeater-Vorrichtung (11) so konfiguriert ist, dass die Repeater-Vorrichtung (11) während der Übertragung einer codierten Nachricht, die keine Statussteuernachricht ist, zwischen der zentralen Steuereinheit (6) und einem oder mehrerer der Versorgungs-/Überwachungs-/Steuermodule (4A, 4B) die codierte Nachricht empfängt und sie an das jeweilige eine oder mehrere Versorgungs-/Überwachungs-/Steuermodule (4A, 4B) oder an die zentrale Steuereinheit (6) wiederholt,
- die Repeater-Vorrichtung (11) konfiguriert ist, sodass sie, falls die codierte Nachricht eine Statussteuernachricht ist, die von der zentralen Steuereinheit (6) gesendete Statussteuernachricht an eines der Versorgungs-/ Überwachungs-/ Steuerungsmodule (4A, 4B) erneut überträgt, wenn das Versorgungs-/Überwachungs-/Steuermodul (4A, 4B) innerhalb einer ersten Grenzzeit (Tₒᵤₜ₁) nicht antwortet und sie die von dem Versorgungs-/Überwachungs-/Steuermodul (4A, 4B) gesendete Statussteuernachricht an die zentrale Steuereinheit (6) erneut überträgt, wenn die zentrale Steuereinheit (6) innerhalb einer zweiten Grenzzeit (Tₒᵤₜ₂) nicht antwortet.

2. Blinkendes Lichtsystem (1) nach Anspruch 1, wobei die Repeater-Vorrichtung (11) die codierten Nachrichten wiederholt, die keine Statussteuernachrichten sind, die im Allgemeinen an alle Module (4A, 4B) gesendet werden und die mindestens Einschaltnachrichten, die Lichtstärke ändernde Nachrichten, Ausschaltnachrichten, Konfigurationsparameter ändernde Nachrichten umfassen.

3. Blinkendes Lichtsystem (1) nach Anspruch 1 oder 2, wobei die Repeater-Vorrichtung (11) Statussteuernachrichten wiederholt, die an einzelne Module (4A, 4B) gesendet werden, um mindestens Parameter wie Strom, Temperatur, Spannung zu erhalten, ebenfalls um das Vorhandensein oder Erreichbarkeit eines bestimmten Moduls (4A, 4B) kontinuierlich zu überprüfen, bis eine Bestätigungsnachricht innerhalb einer vorbestimmten Zeitgrenze vom Empfängermodul oder der Steuereinheit der codierten Nachricht empfangen wird.

4. Blinkendes Lichtsystem (1) nach einem der Ansprüche 1 bis 3, wobei die Repeater-Vorrichtung (11) eines von Versorgungs-/Überwachungs-/Steuermodulen (4A, 4B) ist und mit dem Stromkabel (2) verbunden ist.

5. Blinkendes Lichtsystem (1) nach einem der Ansprüche 1 bis 4, wobei sich die Repeater-Vorrichtung (11) in einem Gehäuse (10) befindet und mit dem Stromkabel (2) über eine Anschlussdose verbunden ist.

6. Blinkendes Lichtsystem (1) nach einem der Ansprüche 1 bis 5, wobei die codierten Nachrichten mittels Powerline-Kommunikation entlang des Stromkabels (2) übertragen werden.

7. Blinkendes Lichtsystem (1) nach einem der Ansprüche 1 bis 6, wobei ein jedes Versorgungs-/Überwachungs-/Steuermodul (4A, 4B) eine Kommunikations- und Steuereinheit (7) zum Austausch von Nachrichten mit der zentralen Steuereinheit (6) und zur Verwaltung des jeweiligen LED-Beleuchters (3) umfasst.

8. Blinkendes Lichtsystem (1) nach einem der Ansprüche 1 bis 7, wobei die zentrale Steuereinheit (6) eine Kommunikations- und Steuereinheit (17) umfasst, die in der Lage ist, Nachrichten durch Powerline-Kommunikation entlang des Stromkabels (2) zu empfangen/übertragen, um die Versorgungs-/Überwachungs-/Steuermodule (4A, 4B) zum Ein- und Ausschalten der jeweiligen LED-Beleuchter (3), Synchronisieren mit anderen Versorgungs-/Überwachungs-/Steuermodulen (4A, 4B), Ändern der Konfigurationsparameter, Übertragen von Status- und Diagnoseinformationen zu steuern.

9. Blinkendes Lichtsystem (1) nach einem der vorhergehenden Ansprüche und Anspruch 3, wobei sich die zentrale Steuereinheit (6) in einer Steuerkabine (15) befindet und ein mit der Kommunikations- und Steuereinheit (17) verbundenes Touchscreen-Panel (9) umfasst, das eine Benutzerschnittstelle implementiert, über die an die Versorgungs-/Überwachungs-/Steuermodule (4A, 4B) übertragene und von diesen empfangene Nachrichten und Ergebnisse der durchgeführten Diagnosevorgänge angezeigt werden und über die Wartungsvorgänge ausgeführt und/oder Befehle gegeben und Nachrichten an die Versorgungs-/Überwachungs-/Steuermodule (4A, 4B), alle mittels Powerline-Kommunikation entlang des Stromkabels (2), gesendet werden.

10. Blinkendes Lichtsystem (1) nach einem der Ansprüche 1 bis 9, wobei das Lichtsystem (1) auch einen Webserver (16) umfasst, der unter Verwendung geeigneter Schnittstelle mit dem Stromkabel (2) verbunden ist, um zusätzliche Dienste bereitzustellen, die eine Protokollierung von Ereignissen oder Zugriff über die Webschnittstelle umfassen und die Ausführung von Steuer- und Diagnosevorgängen, die von einer entfernten Position auszuführen sind, ermöglicht und Firmware-Aktualisierungen sowohl an den Modulen als auch an der zentralen Steuereinheit (6) durchführt.

11. Blinkendes Lichtsystem (1) nach einem der Ansprüche 1 bis 10, wobei das blinkende Lichtsystem (1) zur Verwendung für Signalisierungszwecke in einem Flughafenbereich konfiguriert ist, wobei die LED-Beleuchter (3) auf erhöhten Trägern positioniert sind und/oder in geeignete Gehäuse entlang der Landung und in nahe gelegenen Bereichen eingebaut sind.

12. Blinkendes Lichtsystem (1) nach einem der Ansprüche 1 bis 11, wobei die zentrale Steuereinheit (6) derart konfiguriert ist, dass, wenn es unmöglich ist, mit dem Repeater (11) zu kommunizieren, die zentrale Steuereinheit (6) automatisch zu einem anderen Repeater (11) wechselt.

## Revendications

1. Système d'éclairage clignotant (1), comprenant :
- une pluralité d'illuminateurs (3) reliés électriquement à un câble d'alimentation (2) pour être alimentés par celui-ci ;
- une pluralité de modules d'alimentation/surveillance/contrôle (4A, 4B), chaque module de puissance/surveillance/contrôle (4A, 4B) étant associé à un illuminateur (3) respectif et équipé d'un dispositif de traitement électronique configuré pour effectuer des opérations de surveillance et de contrôle et pour traiter des données sur la base d'un micrologiciel prédéterminé enregistré en son sein ;
- une unité centrale de contrôle (6) configurée pour agir sur chaque module d'alimentation/surveillance/contrôle (4A, 4B) afin d'envoyer et recevoir des messages codés à destination et en provenance de celui-ci, lesdits messages codés incluant des messages de contrôle d'état, lesdits messages codés étant traités sur la base de ce micrologiciel afin de déterminer le temps de mise en marche et d'arrêt de l'illuminateur (3) respectif, de vérifier la synchronisation avec l'allumage et l'extinction d'autres illuminateurs (3), et d'effectuer des opérations de diagnostic ;
- au moins un dispositif répétiteur (11) servant à recevoir et répéter lesdits messages codés, l'au moins un dispositif répétiteur (11) étant interposé entre l'unité centrale de contrôle (6) et les modules d'alimentation/surveillance/contrôle (4A, 4B),
le système d'éclairage clignotant étant **caractérisé en ce que** :
- la pluralité d'illuminateurs (3) sont illuminateurs à LED,
- l'au moins un dispositif répétiteur (11) est configuré de telle sorte que, pendant la transmission d'un message codé, qui n'est pas un message de contrôle d'état, entre ladite unité centrale de contrôle (6) et un ou plusieurs des modules d'alimentation/surveillance/contrôle (4A, 4B), ledit dispositif répétiteur (11) reçoit ledit message codé et le répète au module ou à plusieurs modules d'alimentation/surveillance/contrôle (4A, 4B) respectifs ou à ladite unité centrale de contrôle (6),
- le dispositif répétiteur (11) est configuré, dans le cas où le message codé est un message de contrôle d'état, pour retransmettre ledit message de contrôle d'état, envoyé par ladite unité centrale de contrôle (6), à l'un desdits modules d'alimentation/surveillance/contrôle (4A, 4B) respectifs, si le module d'alimentation/surveillance/contrôle (4A, 4B) ne répond pas dans un premier temps limite (Tₒᵤₜ₁) et pour retransmettre ledit message de contrôle d'état envoyé par ledit module d'alimentation/surveillance/contrôle (4A, 4B) à ladite unité centrale de contrôle (6), si l'unité centrale de contrôle (6) ne répond pas dans un deuxième temps limite (Tₒᵤₜ₂).

2. Système d'éclairage clignotant (1) selon la revendication 1, dans lequel le dispositif répétiteur (11) répète les messages codés qui ne sont pas des messages de contrôle d'état étant envoyés, en général, à tous les modules (4A, 4B) et comprenant au moins des messages d'allumage, des messages modifiant l'intensité lumineuse, des messages d'extinction, des messages modifiant les paramètres de configuration.

3. Système d'éclairage clignotant (1) selon la revendication 1 ou 2, dans lequel le dispositif répétiteur (11) répète des messages de contrôle d'état envoyés à des modules individuels (4A, 4B) pour obtenir au moins des paramètres tels que le courant, la température, la tension, ainsi que pour vérifier la présence ou l'accessibilité d'un module spécifique (4A, 4B), de manière continue, jusqu'à la réception d'un message de confirmation dans un délai prédéterminé à partir du module ou de l'unité de contrôle destinataire du message codé.

4. Système d'éclairage clignotant (1) selon l'une quelconque des revendications 1 à 3, dans lequel ledit dispositif répétiteur (11) est l'un desdits modules d'alimentation/surveillance/contrôle (4A, 4B) et est relié au dit câble d'alimentation (2).

5. Système d'éclairage clignotant (1) selon l'une quelconque des revendications 1 à 4, dans lequel ledit dispositif répétiteur (11) est situé à l'intérieur d'un logement (10) et est relié au dit câble d'alimentation (2) au moyen d'une boîte de jonction.

6. Système d'éclairage clignotant (1) selon l'une quelconque des revendications 1 à 5, dans lequel lesdits messages codés sont transmis par communication par courants porteurs en ligne le long dudit câble d'alimentation (2).

7. Système d'éclairage clignotant (1) selon l'une quelconque des revendications 1 à 6, dans lequel chaque module d'alimentation/surveillance/contrôle (4A, 4B) comprend une unité de communication et de contrôle (7) destinée à l'échange de messages avec l'unité centrale de contrôle (6) et à la gestion de l'illuminateur à LED (3) respectif.

8. Système d'éclairage clignotant (1) selon l'une quelconque des revendications 1 à 7, dans lequel l'unité centrale de contrôle (6) comprend une unité de communication et de contrôle (17) étant capable de recevoir/transmettre des messages par communication par courants porteurs en ligne le long dudit câble d'alimentation (2) pour contrôler lesdits modules d'alimentation/surveillance/contrôle (4A, 4B) afin d'allumer/éteindre les illuminateurs à LED (3) respectifs, de se synchroniser avec d'autres modules d'alimentation/surveillance/contrôle (4A, 4B), de modifier les paramètres de configuration et de transmettre des informations d'état et de diagnostic.

9. Système d'éclairage clignotant (1) selon l'une quelconque des revendications précédentes et la revendication 3, dans lequel l'unité centrale de contrôle (6) est située à l'intérieur d'une cabine de contrôle (15) et comprend un panneau à écran tactile (9) relié à ladite unité de communication et de contrôle (17), mettant en œuvre une interface utilisateur par laquelle les messages transmis et reçus desdits modules d'alimentation/surveillance/contrôle (4A, 4B) et les résultats des opérations de diagnostic effectuées sont affichés et par laquelle les opérations de maintenance sont effectuées et/ou les commandes données et les messages envoyés auxdits modules d'alimentation, de surveillance et de contrôle (4A, 4B), le tout au moyen d'une communication par courants porteurs en ligne le long dudit câble d'alimentation (2).

10. Système d'éclairage clignotant (1) selon l'une quelconque des revendications 1 à 9, dans lequel le système d'éclairage (1) comprend de plus un serveur Internet (16) connecté au moyen d'une interface appropriée au dit câble d'alimentation (2) pour fournir des services supplémentaires, comprenant l'enregistrement d'événements ou l'accès par l'interface Internet et permettant d'effectuer des opérations de contrôle et de diagnostic à distance, et exécuter des mises à jour de micrologiciels à la fois sur lesdits modules et sur ladite unité centrale de contrôle (6).

11. Système d'éclairage clignotant (1) selon l'une quelconque des revendications 1 à 10, dans lequel ledit système d'éclairage clignotant (1) est configuré pour être utilisé à des fins de signalisation dans une zone d'aéroport, avec lesdits illuminateurs à LED (3) positionnés sur des supports surélevés et/ou intégrés dans des logements appropriés, le long des zones d'atterrissage et des zones voisines.

12. Système d'éclairage clignotant (1) selon l'une quelconque des revendications 1 à 11, dans lequel l'unité centrale de contrôle (6) est configurée de telle manière que s'il est impossible de communiquer avec le répétiteur (11), l'unité centrale de contrôle (6) passe automatiquement à un autre répétiteur (11).
